# EUROPÄISCHE PATENTSCHRIFT

(11) **EP 1 579 904 B1**
(45) Veröffentlichungstag und Bekanntmachung des Hinweises auf die Patenterteilung: **01.06.2016**
(21) Anmeldenummer: 05005081.4
(22) Anmeldetag: 09.03.2005
(51) Int. Cl.: B01D 46/42, B01D 46/10, B01D 46/02, B01D 29/01, F16B 5/06, B01D 46/00

(54) **KUNSTSTOFFPROFIL ZUM ZUSAMMENFÜGEN VON FLEXIBLEN, FLACHFÖRMIGEN MATERIALIEN INSBESONDERE VLIESSTOFF-FILTERMEDIEN ODER DGL.**
PLASTIC PROFILE FOR JOINING FLEXIBLE FLAT MATERIALS, ESPECIALLY NONWOVEN FILTER MEDIA.
MATIÈRE PLASTIQUE POUR JOINDRE DE MATÉRIAUX FLEXIBLES ET PLATS, EN PARTICULIER ÉLEMENTS DE FILTRAGE NON-TISSÉES.

(30) Priorität: 26.03.2004 DE 102004014887
(43) Veröffentlichungstag der Anmeldung: 28.09.2005
(73) Patentinhaber: Bieniek, Josef, 45259 Essen (DE)
(72) Erfinder: Bieniek, Josef, 45259 Essen (DE)
(74) Vertreter: Gesthuysen Patent- und Rechtsanwälte

(56) Entgegenhaltungen:
- DE-A1- 4 239 478
- FR-A- 2 770 263
- US-A- 3 076 303
- US-A- 3 553 942

## Beschreibung

Die vorliegende Erfindung betrifft ein Kunststoffprofil zum Zusammenfügen von flexiblen, flachförmigen Materialien z.B. Vliesstoff-Filtermedien oder dgl.

Die Luftfiltertechnik erfüllt eine zentrale und zunehmend wichtigere Funktion bei der Aufbereitung der Luft in klimatechnischen und prozeßtechnischen Anlagen.

Hier werden Luftfilter eingesetzt, die als Einrichtungen zur Abscheidung von Staub und anderen Verunreinigungen aus der Luft dienen. Luftfilter bestehen u.a. aus Filtertaschen, die zur einer Einheit durch Zusammennähen oder Zusammenschweißen zusammengefügt und durch eine Stützkonstruktion in einem Filterrahmen gehalten werden.

Eine Vorrichtung, die ausschließlich zur Einspannung eines Flächenelementes dient, insbesondere eines Filtervlieses, mit einem U-förmigen Rahmen und entsprechend eingesetztem Klemmstreifen, ist nach bisherigem Stand der Technik bekannt und in der DE 42 39 478 A1 beschrieben. Das Flächenelement z.B. Filtervlies wird zwischen den beiden U-Schenkeln des U-Rahmens, mittels eines Klemmstreifens eingespannt. Ein Profil zum Zusammenfügen von Filtern ist in der US3553942 beschirieben.

Der Erfindung liegt demgegenüber die Aufgabe zugrunde, Kunststoffprofil als Verbindungselement für z.B. Vliesstoff-Filtermedien oder dgl. zu entwickeln, um diese zusammenfügen zu können.

Der in Patentansprüchen angegebenen Erfindung liegt das Problem zugrunde, die Vielzahl von Handarbeit zu mechanisieren und somit die Arbeitszeiten zu verkürzen, wie auch Materialeinsparungen vorzunehmen und eine ökologische Entsorgung sicherstellen. Ausführungsbeispiele der Erfindung sind in den Zeichnungen veranschaulicht und nachstehend im einzelnen anhand der Zeichnungen 1 bis 4 näher beschrieben.

Dabei zeigt:
- **Fig. 1**: einen Querschnitt des erfindungsgemäß ausgebildeten Kunststoffprofils,
- **Fig. 2**: einen Querschnitt von zusammengefügten Kunststoffprofilen mit dazwischen angebrachten Vliesstoff-Filtermedien oder dergleichen,
- **Fig. 3**: eine perspektivische Teilansicht der Ausführungsform nach Fig. 2, d.h. eines Trägerprofils das durch zusammengeklemmte Kunststoffprofile mit dazwischen angebrachten Vliesstoff-Filtermedien oder dgl. gebildet ist,
- **Fig. 4**: ein automatisiertes Verfahren für das Zusammenfügen von z.B. Vliesstoff-Filtermedien oder dgl. unter Verwendung von Kunststoffprofilen.

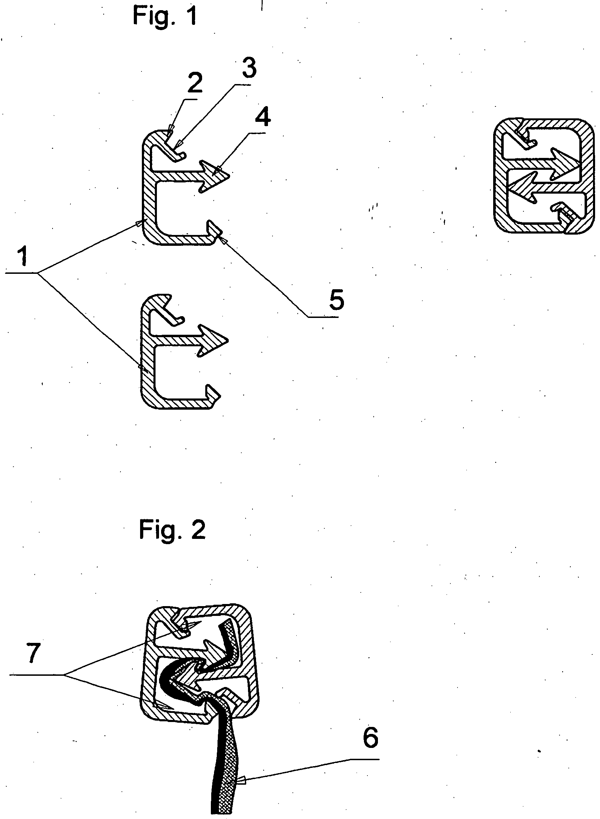

In **Fig. 1****:** Die Aufgabe wird erfindungsgemäß dadurch gelöst, daß das Verbindungselement insbesondere nach Art eines C-förmigen Profils (1) mit hakenförmigem Steg (5) und einen Verankerungssteg (4) ausgestattet ist, welche die Klemmwirkung der Profile bewirken.

An seiner Innenfläche befindet sich eine Längsrippe (3).

Das Kunststoffprofil (1) wird mit einem keilförmigen Ende (2) ausgebildet und mit unterschiedlichen Wanddicken ausgestattet. Das ermöglicht eine elastische Verformung des Kunststoffprofils und verhindert einen Profilriß beim Zusammenfügen von z.B. Vliesstoff-Filtermedien oder dgl., wo entsprechende Preßkraft eingesetzt wird.

In **Fig. 2****:** Zwei gegenüberpositionierte Kunststoffprofile (1) in einer formschlüssigen Lage stellen durch Klemmwirkung eine schlüssige Verbindung für die dazwischen angebrachte Vliesstoff-Filtermedien (6) oder dgl. dar.

Zusammengeklemmte Profile bilden einen Hohlkanal (7) zur Aufnahme von z.B. Vliesstoff-Filtermedien oder dergleichen.

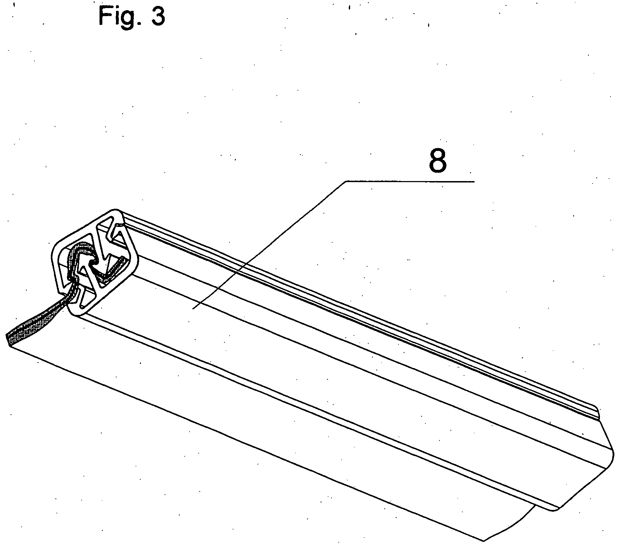

In **Fig. 3****:** Die zwei zusammengeschlossenen Kunststoffprofile erstellen für die angebrachten, z.B. Vliesstoff-Filtermedien oder dgl., ein Trägerprofil (8), das als Stützkonstruktion für den Filterbau eingesetzt werden kann.

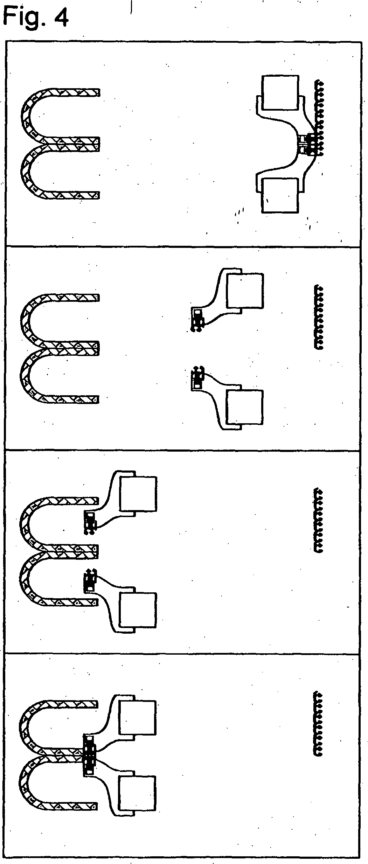

In **Fig. 4****:** Wie beim automatisierten Verfahren können die Kunststoffprofile mit den beispielsweise Filtertaschen zusammengefügt werden.
Durch eine dafür entwickelte Vorrichtung werden zwei Kunststoffprofile entsprechend positioniert und gegenüberliegend, z.B. zu den Eintritsflächen der Filtertaschen angebracht und zusammengeklemmt.
Heraus folgt, daß durch diese Erfindung sowohl wirtschaftliche als auch ökologische Anforderungen erfüllt werden. Es entfällt die aufwendige Stützkonstruktion, die meist aus Metall besteht.
Das Kunststoffprofil ist aufgrund seiner Materialeigenschaften auch hygienisch unbedenklich.
Es ist geschlossenporig. Das bedeutet, daß kein mikrobiologisches Wachstum an seiner Oberfläche auftreten kann, und es ist auch entsorgungsfreundlich (voll veraschbar und deponiefähig).

## Patentansprüche

1. Kunststoffprofil (1), wobei das Kunststoffprofil (1) aus einem C-förmig ausgebildeten Profilstrang mit einem hakenförmigen Steg (5) und einem Verankerungssteg (4) ausgestattet ist, die für die Klemmwirkung der Profile vorgesehen sind,
**dadurch gekennzeichnet, daß** das Kunststoffprofil (1) mit einem keilförmigen Ende ausgebildet ist und an seiner Innenfläche eine Längsrippe (3) aufweist, die mit dem keilförmigen Ende (2) des Kunststoffprofils (1) eine V-förmige Nut bildet, und
daß das Kunststoffprofil (1) derartig ausgestaltet ist, dass in dem Fall, dass von zwei gleichen Kunststoffprofilen (1) ein Profil gegenüber dem anderen um 180° gedreht ist und die zwei Kunststoffprofile (1) zusammengeklemmt sind, der hakenförmige Steg (5) in die durch die Längsrippe (3) und das keilförmige Ende (2) des Kunststoffprofils (1) ausgebildete V-förmige Nut verhakt.

2. Kunststoffprofil (1) nach Anspruch 1,
**dadurch gekennzeichnet,**
**daß** das Kunststoffprofil (1) derartig ausgestaltet ist, daß zwei zusammengefügte gleiche Kunststoffprofile (1) einen Längskanal (7) als Hohlkanal bilden.

3. Kunststoffprofil (1) nach einem der Ansprüche 1 oder 2
**dadurch gekennzeichnet,**
**daß** das Kunststoffprofil (1) unterschiedliche Wanddicken im Querschnitt aufweist.

## Claims

1. Plastic profile (1) wherein the plastic profile (1) is formed of a C-shaped profile strip with a hook-shaped bar (5) and an anchoring bar (4), which are provided for the clamping action of the profile,
**characterized in**
**that** the plastic profile (1) is formed having a wedge-shaped end and has a longitudinal rib (3) on its inner side that forms a V-shaped groove with the wedge-shaped end (2) of the plastic profile (1), and
**that** the plastic profile (1) is designed so that, in the case that one profile of two like plastic profiles (1) is turned 180° with respect to the other and the two plastic profiles (1) are clamped together, the hook-shaped bar (5) hooks into the V-shaped groove formed by the longitudinal rib (3) and the wedge-shaped end (2) of the plastic profile (1).

2. Plastic profile (1) according to claim 1,
**characterized in**
**that** the plastic profile (1) is designed so that two joined, like plastic profiles (1) form a longitudinal channel (7) as hollow channel.

3. Plastic profile (1) according to claim 1 or 2,
**characterized in**
**that** the plastic profile (1) has different wall thicknesses in cross section.

## Revendications

1. Profilé en plastique (1), le profilé en plastique (1) étant configuré à partir d'un boudin profilé réalisé en forme de C avec une branche en forme de crochet (5) et une branche d'ancrage (4), lesquelles sont prévues pour conférer aux profilés un effet de serrage,
**caractérisé en ce que**
le profilé en plastique (1) est réalisé avec une extrémité en forme de clavette et présente au niveau de sa surface intérieure une nervure longitudinale (3) qui forme avec l'extrémité en forme de clavette (2) du profilé en plastique (1) une rainure en forme de V, et **en ce que** le profilé en plastique (1) est configuré de telle sorte que dans le cas où, parmi deux profilés en plastique identiques (1), un profilé est tourné de 180° par rapport à l'autre, et que les deux profilés en plastique (1) sont serrés ensemble, la nervure en forme de crochet (5) s'accroche dans la rainure en forme de V réalisée par la nervure longitudinale (3) et l'extrémité en forme de clavette (2) du profilé en plastique (1).

2. Profilé en plastique (1) selon la revendication 1, **caractérisé en ce que**
le profilé en plastique (1) est configuré de telle sorte que deux profilés en plastique (1) identiques assemblés l'un à l'autre forment un canal longitudinal (7) en tant que canal creux.

3. Profilé en plastique (1) selon l'une quelconque des revendications 1 ou 2,
**caractérisé en ce que**
le profilé en plastique (1) présente des épaisseurs de paroi différentes en section transversale.
